# EUROPEAN PATENT SPECIFICATION

(11) **EP 1 693 525 B1**
(45) Date of publication and mention of the grant of the patent: **11.11.2009**
(21) Application number: 06101674.7
(22) Date of filing: 14.02.2006
(51) Int. Cl.: E04B 1/41, F16B 37/04

(54) **Anchoring device for concrete products**
Verankerungsvorrichtung für Betonprodukte
Dispositif d'ancrage pour produits en béton

(30) Priority: 16.02.2005 IT MI20050044 U
(43) Date of publication of application: 23.08.2006
(73) Proprietor: Edilmatic S.R.L., 46020 Pegognaga (Mantova) (IT)
(72) Inventor: Giorgio, LUITPRANDI, 46020, PEGOGNAGA (IT)
(74) Representative: Jorio, Paolo

(56) References cited:
- EP-A1- 0 016 384
- EP-A2- 0 278 252

## Description

The present invention relates to an anchoring device for concrete products.

As known, an anchoring device for concrete products comprises a hollow profile which may be embedded in the concrete product and comprises two walls, which are reciprocally separated by a gap; a bolt, presenting a head withheld by walls inside the hollow profile and a threaded shank extending outside the profile; and a nut, which is fastenable to the threaded shank so that the walls can be tightened between the bolt head and the nut.

The type of anchoring device described above does not effectively prevent the shifts between the bolt and the profile in a direction parallel to the gap, as the effective action against such shifting is remitted solely to the friction between the bolt head, the nut and the profile.

To avoid this drawback, a second type of anchoring device envisages that said walls are provided with edges from which the teeth alternated by compartments protrude, and a coupling member, which is provided with protrusions, each of which is adapted to engage a compartment, and a hole in which the bolt shank is accommodated. In this way, the relative shifts between the bolt and the profile are prevented by the coupling between the protrusions of the coupling member and the teeth of said walls.

An anchoring device having all the characteristics of the preambel of claim 1 is known from document EP 0278252.

However, also the type of anchoring device described above is not fully satisfactory because the bolt head is capable of rotating about its axis.

It is the object of the present invention to achieve a fastening device for concrete products of the type described above in which is obtained an effective fastening adapted to prevent all types of relative shifts between the bolt and the profile.

The anchoring device of the invention is defined by the characteristics of claim 1.

According to the present invention is obtained an anchoring device for concrete products characterised in that said protrusions comprise two guides extending in the cavity of the profile and interfering with the bolt head so as to prevent the bolt from rotating.

According to a preferred embodiment of the present invention, the anchoring device is characterised in that said walls are reciprocally slanted and converge towards the internal cavity of the profile; the bolt head and the coupling member being shaped so as to mesh by shape with the walls.

In this way, both the possible oscillations of the coupling member with respect to the profile due to the inevitable coupling clearance between the teeth and the protrusions and the possible oscillations between the bolt and the profile due to the clearance between the bolt head and the guides are eliminated.

For a better understanding of the present invention, it will now be described an embodiment thereof only by way of non-limitative example, and with reference to the accompanying drawings, in which:
- Figure 1 is a perspective view of a fastening device for concrete products made according to the present invention;
- figure 2 is a section view on a magnified scale of the fastening device in figure 1;
- figure 3 is a perspective exploded view of the fastening device in figure 1; and
- figure 4 is a perspective view of a component of the anchoring device in figure 1.

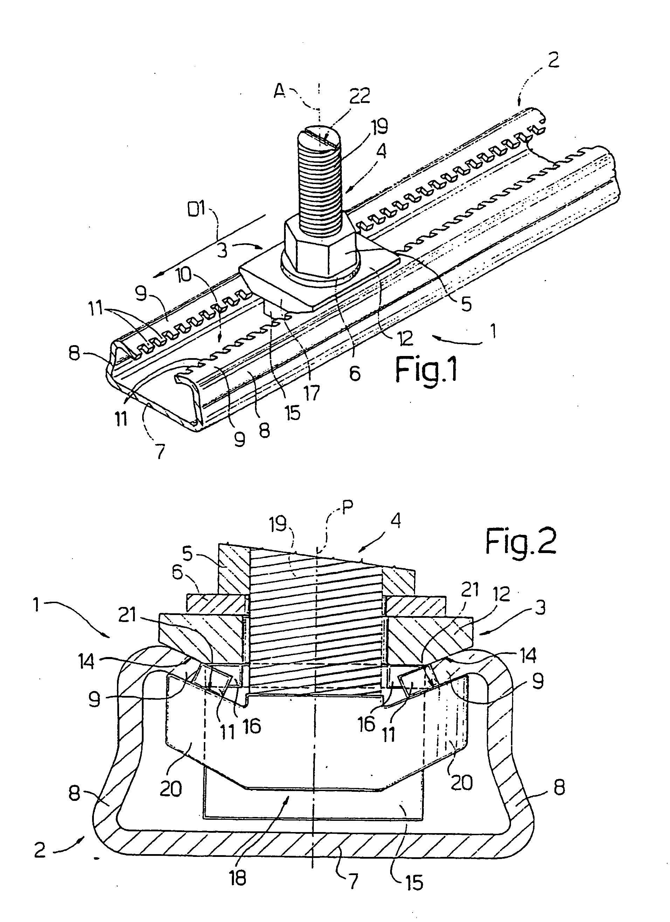

With reference to figure 1, it is indicated as a whole by 1 an anchoring device for concrete products. The anchoring device 1 comprises a profile 2, a coupling member 3, a bolt 4, a nut 5 and a washer 6. The profile 2 has an essentially C-shaped section, extends in a direction D1, presents a symmetry plane P (figure 2) parallel to direction D1 and defines an internal cavity. In essence, the profile 2 comprises a rear wall 7, two side walls 8 and two front walls 9. The profile 2 is intended to be embedded in a concrete product (not shown). In practice, the concrete product is in direct contact with the external faces of the walls 7 and 8, while the walls 9 are essentially flush with a free end of the concrete product. The internal cavity of the profile 2 is maintained free, i.e. is not filled with concrete.

With reference to figure 2, the side walls 8 are slightly concave, with the concavity facing outwards and essentially converging, while the walls 9 are flat and separated by a gap 10. All walls 7, 8 and 9 have a constant thickness, while wall 7 and the walls 9 are flat and joined to the side walls 8. Each wall 9 is slanted towards the internal cavity of the profile 2 so as to form with the opposite wall 9 an angle of approximately 140°. In general, also the angles between 120° and 160° are found to be compatible with the machining operations and the use of the anchoring device 1. Each wall 9 presents an edge provided with teeth 11, which are essentially coplanar with the remaining part of the wall 9 and are distributed at constant pitch in direction D1 and define compartments having a width (in direction D1) essentially equal to the width of the teeth 11 (in direction D1).

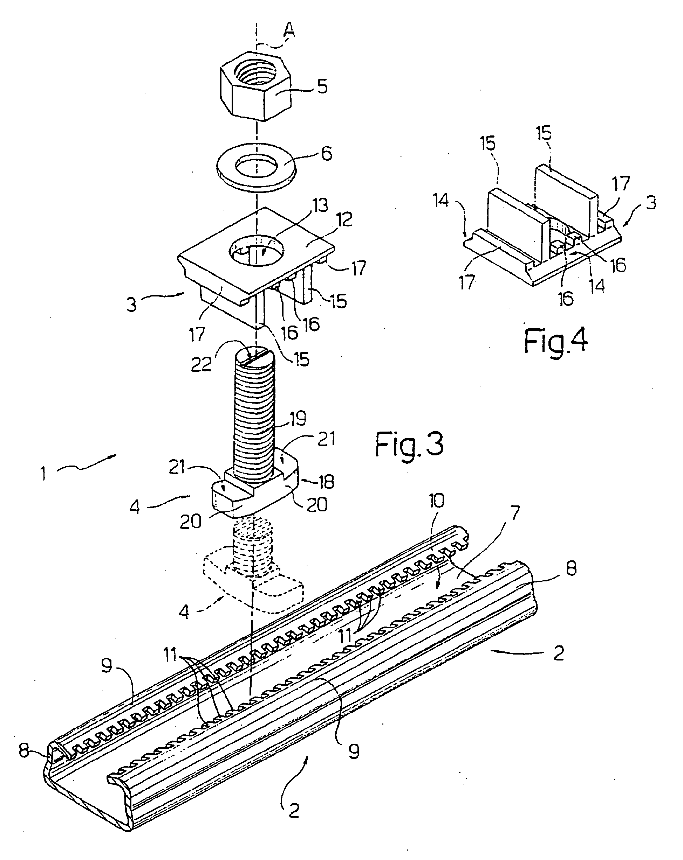

With reference to figures 3 and 4, the coupling member 3 comprises a plate 12 provided with a central hole 13 for the passage of the bolt 4, and two side faces 14, each of which is slanted and parallel to a respective wall 9 so as to make an extended surface contact with the respective wall 9. The member 3 comprises protrusions extending towards the internal cavity of the profile and comprising two guides 15 which perpendicularly extend to the plate 12 and are arranged on opposite sides of the hole 13. Each guide 15 engages two compartments belonging to two opposite walls 9 and protrudes into the cavity of the profile 2 to near the wall 7. The protrusions comprise two rows of teeth 16 arranged between the guides 15. Each tooth 16 extends perpendicularly to the plate 12 and is adapted to be inserted in a compartment formed by two teeth 11 adjacent to one of the walls 9. The protrusions also comprise two ridges 17 extending parallelly to the plate 12 and being arranged on opposite ends of the plate 12 itself. Each ridge 17 is adapted to be engaged in two compartments belonging to the opposite walls 9.

The ridges 17 are omitted in an embodiment not shown.

With reference to figure 3, the bolt 4 comprises a head 18 and a threaded shank 19 which extends along an axis A perpendicular to the direction D1. The head 18 presents two arms 20 extending on opposite bands with respect to axis A. Each arm 20 presents a face 21 parallel to one of the walls 9. In other words, the faces 21 form therebetween the same angle formed by the slanted walls 9 so as to ensure an extended surface contact between each arm 20 and the respective wall 9. The free end of the shank 19 presents a slot 22 perpendicular to axis A and oriented in the same way as the arms 20 so as to provide the operator with an indication of the orientation of the head 18, when the latter is arranged in the cavity of the profile 2.

In use and with reference to figure 3, the head 18 of the bolt 4 is inserted in the cavity of the profile 2, positioned in the desired point, and turned about axis A (bolt 2 drawn with a broken line in figure 3). The coupling member 3 is then coupled with the profile 2 and the shank 19 inserted in the hole 13. This operation requires that the guides 15, the teeth 16 and the ridges 17 occupy respective compartments between the adjacent teeth 11 and the head 18 of the bolt 4 is arranged between the two guides 15. The dimension of the head 18 and the distance between the two guides 15 are dimensioned so as to prevent a rotation of the bolt 4 about the axis A. However, since a certain clearance is envisaged between the head 18 and the walls 9 to facilitate coupling between the bolt 4 and the coupling member 3, an oscillation of the bolt 4 about axis A is possible.

The washer 6 is then inserted around the shank 19 and the bolt 5 is fastened so as to secure each wall 9 between one of the arms 20 and the plate 12. In particular, the meshing by shape of the head 18, the walls 9 and the plate 12 prevents any rotation of the bolt 2 and the coupling member 3 (figure 2).

In the example shown, reference was made to a case in which the walls 9 are flat and slanted towards the internal cavity of the profile 2, of course the present invention applies to any type of shape or inclination of the walls providing that the latter are capable of ensuring a meshing by shape of the bolt head and the coupling member.

## Claims

1. An anchoring device for concrete products, comprising:
- a hollow profile (2), which may be embedded in the concrete product, has two walls (9) presenting respective edges provided with first teeth (11) and being reciprocally separated by a gap (10);
- a coupling member (3) provided with protrusions (15, 16, 17), each of which is adapted to occupy at least one compartment comprised between two first adjacent teeth (11); and
- a bolt (4) and a nut (5) adapted to secure said coupling member (3) to said profile (2); the bolt (4) being provided with a head (18) which can be accommodated in the internal cavity of the profile (2) and is couplable with said walls (9);
the anchoring device (1) being **characterised in that** said protrusions (15, 16, 17) comprise two guides (15) extending into the cavity of the profile (2) and
interfering with the head (18) of the bolt (4) so as to prevent the bolt (4) from rotating.

2. A device according to claim 1, **characterised in that** each guide (15) is engaged in two opposite, facing compartments.

3. A device according to claim 1 or 2, **characterised in that** said protrusions (15, 16, 17) comprise two ridges (17) arranged on opposite bands with respect to said guides (15); each ridge (17) being engaged in two opposite and facing compartments.

4. A device according to any of the claims from 1 to 3, **characterised in that** said protrusions (15, 16, 17) comprise second teeth (16), each second tooth (16) being adapted to engage a respective compartment.

5. A device according to any of the preceding claims, **characterised in that** said walls (9) are reciprocally slanted; the head (18) of the bolt (2) and the coupling member (3) being shaped so as to mesh by shape with the walls (9).

6. A device according to claim 5, **characterised in that** said walls (9) converge towards the cavity of said profile (2).

7. A device according to claim 6, **characterised in that** said walls (9) form an angle from 120° to 160°, preferably 140°.

8. A device according to any one of the claims from 5 to 7, **characterised in that** said coupling member (3) comprises a plate (12) presenting two faces (14) parallel to said walls (9) and adapted to be arranged in contact with said walls (9) to form an extended surface contact with said walls (9).

9. A device according to any one of the claims from 5 to 8, **characterised in that** the head (18) comprises two arms (20) each arm (20) presenting a wall (21) parallel to a respective wall (9) and adapted to be arranged in contact with the same so as to make an extended surface contact with said wall (9).

10. A device according to any one of the preceding claims, **characterised in that** said walls (9) are flat.

11. A device according to any one of the preceding claims, **characterised in that** said walls (9) have a constant thickness.

## Patentansprüche

1. Ankervorrichtung für Betonprodukte, welche Folgendes aufweist:
ein hohles Profil (2), welches in dem Betonprodukt eingebettet werden kann, welches zwei Wände (9) besitzt, die jeweilige Ecken aufweisen, die mit ersten Zähnen (11) versehen sind und gegenüberliegend durch einen Spalt (10) getrennt sind;
ein Kupplungsglied (3), welches mit Vorsprüngen (15, 16, 17) versehen ist,
wobei jeder davon geeignet ist, um zumindest ein Abteil einzunehmen, welches zwischen zwei ersten benachbarten Zähnen (11) gebildet wird; und
eine Schraube (4) und eine Mutter (5), die geeignet sind, um das Kupplungsglied (3) an dem Profil (2) zu befestigen; wobei die Schraube (4) mit einem Kopf (18) versehen ist, der in dem inneren Hohlraum des Profils (2) aufgenommen werden kann und mit den Wänden (9) koppelbar ist;
wobei die Ankervorrichtung (1) **dadurch gekennzeichnet ist, dass** die Vorsprünge (15, 16, 17) zwei Führungen (15) aufweisen, die sich in den Hohlraum des Profils (2) erstrecken und mit dem Kopf (18) der Schraube (4) in Wechselwirkung treten, um zu verhindern, dass sich die Schraube (4) dreht.

2. Vorrichtung nach Anspruch 1, **dadurch gekennzeichnet, dass** jede Führung (15) mit zwei gegenüberliegenden zueinander weisenden Abteilen in Eingriff ist.

3. Vorrichtung nach Anspruch 1 oder 2, **dadurch gekennzeichnet, dass** die Vorsprünge (15, 16, 17) zwei Kanten (17) aufweisen, die in gegenüberliegenden Bändern bezüglich der Führungen (15) angeordnet sind; wobei jede Kante (17) in zwei gegenüberliegenden und zueinander weisenden Abteilen in Eingriff ist.

4. Vorrichtung nach einem der Ansprüche 1 bis 3, **dadurch gekennzeichnet, dass** die Vorsprünge (15, 16, 17) zweite Zähne (16) aufweisen, wobei jeder zweite Zahn (16) geeignet ist, um mit einem jeweiligen Abteil in ein Eingriff zu kommen.

5. Vorrichtung nach einem der vorhergehenden Ansprüche, **dadurch gekennzeichnet, dass** die Wände (9) umgekehrt geneigt sind; wobei der Kopf (18) der Schraube (2) und das Kupplungsglied (3) so geformt sind, dass sie durch die Form mit den Wänden (9) in Eingriff kommen.

6. Vorrichtung nach Anspruch 5, **dadurch gekennzeichnet, dass** die Wände (9) zum Hohlraum des Profils (2) hin zusammenlaufen.

7. Vorrichtung nach Anspruch 6, **dadurch gekennzeichnet, dass** die Wände (9) einen Winkel von 120° bis 160° und vorzugsweise 140° bilden.

8. Vorrichtung nach einem der Ansprüche 5 bis 7, **dadurch gekennzeichnet, dass** das Kupplungsglied (3) eine Platte (12) aufweist, die zwei Stirnseiten (14) parallel zu den Wänden (9) aufweist und geeignet ist, um in Kontakt mit den Wänden (9) angeordnet zu werden, um einen erweiterten Oberflächenkontakt mit den Wänden (9) zu bilden.

9. Vorrichtung nach einem der Ansprüche 5 bis 8, **dadurch gekennzeichnet, dass** der Kopf (18) zwei Arme (20) aufweist, wobei jeder Arm (20) eine Wand (21) parallel zu einer jeweiligen Wand (9) aufweist, die geeignet ist, um in Kontakt mit derselben angeordnet zu werden, um einen erweiterten Oberflächenkontakt mit der Wand (9) herzustellen.

10. Vorrichtung nach einem der vorhergehenden Ansprüche, **dadurch gekennzeichnet, dass** die Wände (9) flach sind.

11. Vorrichtung nach einem der vorhergehenden Ansprüche, **dadurch gekennzeichnet, dass** die Wände (9) eine konstante Dicke haben.

## Revendications

1. Dispositif d'ancrage pour produits en béton, comprenant :
- un profilé creux (2), qui peut être encastré dans le produit en béton, possède deux parois (9) présentant des bords respectifs pourvus de premières dents (11) et étant mutuellement séparés par un écart (10) ;
- un élément d'accouplement (3) pourvu de saillies (15, 16, 17), dont chacune est adaptée pour occuper au moins un compartiment compris entre deux premières dents adjacentes (11) ; et
- un boulon (4) et un écrou (5) adaptés pour fixer ledit élément d'accouplement (3) audit profilé (2) ; le boulon (4) étant pourvu d'une tête (18) qui peut être logée dans la cavité interne du profilé (2) et peut être accouplée auxdites parois (9) ;
le dispositif d'ancrage (1) étant **caractérisé en ce que** lesdites saillies (15, 16, 17) comprennent deux guidages (15) s'étendant dans la cavité du profilé (2) et
interférant avec la tête (18) du boulon (4) afin de d'empêcher le boulon (4) de tourner.

2. Dispositif selon la revendication 1, **caractérisé en ce que** chaque guidage (15) est en prise dans deux compartiments opposés se faisant face.

3. Dispositif selon la revendication 1 ou 2, **caractérisé en ce que** lesdites saillies (15, 16, 17) comprennent deux crêtes (17) agencées sur des bandes opposées par rapport auxdits guidages (15) ; chaque crête (17) étant en prise dans deux compartiments opposés se faisant face.

4. Dispositif selon une quelconque des revendications 1 à 3, **caractérisé en ce que** lesdites saillies (15, 16, 17) comprennent des secondes dents (16), chaque seconde dent (16) étant adaptée pour entrer en prise avec un compartiment respectif.

5. Dispositif selon une quelconque des revendications précédentes, **caractérisé en ce que** lesdites parois (9) sont mutuellement inclinées ; la tête (18) du boulon (2) et l'élément d'accouplement (3) étant formés afin de s'engrener par forme avec les parois (9).

6. Dispositif selon la revendication 5, **caractérisé en ce que** lesdites parois (9) convergent vers la cavité dudit profilé (2).

7. Dispositif selon la revendication 6, **caractérisé en ce que** lesdites parois (9) forment un angle de 120° à 160°, de préférence 140°.

8. Dispositif selon une quelconque des revendications 5 à 7, **caractérisé en ce que** ledit élément d'accouplement (3) comprend une plaque (12) présentant deux faces (14) parallèles auxdites parois (9) et adaptées pour être agencées en contact avec lesdites parois (9) pour former un contact de surface étendue avec lesdites parois (9).

9. Dispositif selon une quelconque des revendications 5 à 8, **caractérisé en ce que** la tête (18) comprend deux bras (20), chaque bras (20) présentant une paroi (21) parallèle à une paroi respective (9) et adaptée pour être agencée en contact avec celle-ci afin de réaliser un contact de surface étendue avec ladite paroi (9).

10. Dispositif selon une quelconque des revendications précédentes, **caractérisé en ce que** lesdites parois (9) sont plates.

11. Dispositif selon une quelconque des revendications précédentes, **caractérisé en ce que** lesdites parois (9) possèdent une épaisseur constante.
